# EUROPEAN PATENT APPLICATION

(11) **EP 4 826 653 A1**
(43) Date of publication of application: **21.10.2026**
(21) Application number: 24935727.8
(22) Date of filing: 12.12.2024
(51) Int. Cl.: G06T 7/70

(54) **SYSTEM AND METHOD FOR POSITIONING FLAW DETECTION WELD JOINT OF CONVENTIONAL ISLAND OF NUCLEAR POWER PLANT**

(30) Priority: 15.04.2024 CN 202410449890
(71) Applicant: China Nuclear Power Engineering Co., Ltd., Shenzhen, Guangdong 518116 (CN)
(72) Inventor: WANG, Dengji, Shenzhen, Guangdong 518116 (CN); XIE, Shengzhao, Shenzhen, Guangdong 518116 (CN); LIU, Yu, Shenzhen, Guangdong 518116 (CN); ZHOU, Kai, Shenzhen, Guangdong 518116 (CN); WU, Shougeng, Shenzhen, Guangdong 518116 (CN); WU, Meifeng, Shenzhen, Guangdong 518116 (CN); LI, Jinlei, Shenzhen, Guangdong 518116 (CN); NIE, Yan, Shenzhen, Guangdong 518116 (CN); WANG, Qi, Shenzhen, Guangdong 518116 (CN); HU, Yong, Shenzhen, Guangdong 518116 (CN)
(74) Representative: Westphal, Mussgnug & Partner, Patentanwälte mbB
(86) International application number: PCT/CN2024/138942
(87) International publication number: WO 2025/218199

(57) **Abstract**

The present invention relates to a system and a method for non-destructive testing weld joint positioning in the conventional island of a nuclear power plant, comprising: a BIM system unit, a mobile terminal, and an AR positioning unit. The BIM system unit processes a source drawing and performs data matching on a non-destructive testing weld joint to be positioned, thereby obtaining a three-dimensional model. The mobile terminal transmits the three-dimensional model to the AR positioning unit. The AR positioning unit receives the three-dimensional model of the non-destructive testing weld joint to be positioned, compares the three-dimensional model with physical object on site, and determines the on-site position of the non-destructive testing weld joint based on the comparison result. In the present invention, by means of the BIM system unit, the source drawing is automatically acquires and matching is performed to obtain a three-dimensional model, then the mobile terminal is used to transmit the three-dimensional model to the AR positioning unit. So that, by means of the AR positioning unit, the three-dimensional model and physical object on site can be used to perform comparison and positioning to accurately identify the position to the non-destructive testing weld joint, the problem of information distortion caused by manual data transmission can be avoided, the efficiency and accuracy of non-destructive testing weld joint positioning can also be improved.

## Description

### TECHNICAL FIELD

The invention relates to the technical field of nuclear power conventional island pipeline installation, in particular to a system and a method for non-destructive testing weld joint positioning in the conventional island of a nuclear power plant.

### DESCRIPTION OF RELATED ART

Currently, the positioning of non-destructive testing weld joints in the conventional island of nuclear power plants still relies on the joint participation of personnel from various stages of pipeline installation. It is organized through daily on-site handovers from welding technicians to non-destructive testing operators. The existing method is inefficient, inaccurate, and inflexible. It not only consumes significant manpower but also easily leads to information omission, transmission errors, and other issues during the communication of non-destructive testing weld joint data, resulting in information distortion and affecting accuracy.

### BRIEF SUMMARY OF THE INVENTION

The technical problem to be solved by the present invention is to provide a system and a method for non-destructive testing weld joint positioning in the conventional island of a nuclear power plant.
The technical solution adopted by the present invention to solve its technical problem is to construct a system for non-destructive testing weld joint positioning in the conventional island of a nuclear power plant, comprising: a BIM system unit, a mobile terminal, and an AR positioning unit;
The BIM system unit is configured to process a source drawing and perform data matching for the non-destructive testing weld joint to be positioned, so as to obtain a three-dimensional model;
The mobile terminal communicates with the BIM system unit and is configured to receive the three-dimensional model of the non-destructive testing weld joint to be positioned output by the BIM system unit and transmit it to the AR positioning unit;
The AR positioning unit communicates with the mobile terminal and is configured to compare and position the three-dimensional model of the non-destructive testing weld joint to be positioned with a physical object on site, and determine the on-site position of the non-destructive testing weld joint to be positioned based on the comparison result.

In the system for non-destructive testing weld joint positioning in the conventional island of a nuclear power plant according to the present invention, the BIM system unit comprises:
A BIM decomposition module, which is configured to obtain a source drawing corresponding to the non-destructive testing weld joint to be positioned, and convert and decompose the source drawing to obtain three-dimensional data of the non-destructive testing weld joint to be positioned;
A non-destructive testing weld joint data matching module, connected to the BIM decomposition module, is configured to perform data matching between the non-destructive testing weld joint to be positioned and the three-dimensional data to obtain the three-dimensional model.

In the system for non-destructive testing weld joint positioning in the conventional island of a nuclear power plant according to the present invention, the BIM decomposition module comprises:
A drawing acquisition module, configured to read the source drawing from a database; the source drawing being a drawing of a three-dimensional model;
A model decomposition module, connected to the drawing acquisition module and configured to decompose the three-dimensional model to obtain the three-dimensional data of the non-destructive testing weld joint to be positioned.

In the system for non-destructive testing weld joint positioning in the conventional island of a nuclear power plant according to the present invention, the non-destructive testing weld joint data matching module comprises:
A code determination module, configured to determine the weld joint code of the non-destructive testing weld joint to be positioned;
A matching module, configured to match the weld joint code of the non-destructive testing weld joint to be positioned with the three-dimensional data to determine the position of the non-destructive testing weld joint to be positioned on the three-dimensional model;
A display module, configured to display the non-destructive testing weld joint to be positioned and its information on the three-dimensional model according to the position of the non-destructive testing weld joint to be positioned on the three-dimensional model.
in the system for non-destructive testing weld joint positioning in the conventional island of a nuclear power plant according to the present invention, the AR positioning unit comprises: AR glasses;
The AR glasses communication with the mobile terminal, and are configured to compare the three-dimensional model of the non-destructive testing weld joint to be positioned with a physical object on site, and determine the on-site position of the non-destructive testing weld joint to be positioned based on the comparison result.

In the system for non-destructive testing weld joint positioning in the conventional island of a nuclear power plant according to the present invention, the AR glasses comprise:
a data acquisition module, which communicates with the mobile terminal and is configured to receive the three-dimensional model;
an image acquisition module, which is configured to capture an image on site to obtain the physical objects on site;
a positioning module, which is respectively connected to the data acquisition module and the image acquisition module, and is configured to compare the three-dimensional model with the physical object on site and determine the on-site position of the non-destructive testing weld joint to be positioned based on the comparison result.

The present invention also provides a method for non-destructive testing weld joint positioning in the conventional island of a nuclear power plant, applied to the system for non-destructive testing weld joint positioning in the conventional island of a nuclear power plant provided by the present invention, comprising the following steps:
processing a source drawing and performing data matching for the non-destructive testing weld joint to be positioned through a BIM system unit to obtain a three-dimensional model;
receiving the three-dimensional model of the non-destructive testing weld joint to be positioned output by the BIM system unit and transmitting it to an AR positioning unit through a mobile terminal;
receiving the three-dimensional model of the non-destructive testing weld joint to be positioned and comparing the three-dimensional model of the non-destructive testing weld joint to be positioned with physical object on site, and determining the on-site position of the non-destructive testing weld joint to be positioned based on the comparison result through the AR positioning unit.

In the method for non-destructive testing weld joint positioning in the conventional island of a nuclear power plant according to the present invention, the step of processing a source drawing and performing data matching for the non-destructive testing weld joint to be positioned to obtain a three-dimensional model comprises:
obtaining a source drawing corresponding to the non-destructive testing weld joint to be positioned, and converting and decomposing the source drawing to obtain three-dimensional data of the non-destructive testing weld joint to be positioned;
performing data matching between the non-destructive testing weld joint to be positioned and the three-dimensional data to obtain the three-dimensional model.

In the method for non-destructive testing weld joint positioning in the conventional island of a nuclear power plant according to the present invention, the step of obtaining a source drawing corresponding to the non-destructive testing weld joint to be positioned, and converting and decomposing the source drawing to obtain three-dimensional data of the non-destructive testing weld joint to be positioned comprises:
reading the source drawing from a database; the source drawings being a drawing of a three-dimensional model;
decomposing the three-dimensional model to obtain the three-dimensional data of the non-destructive testing weld joint to be positioned;
the step of performing data matching between the non-destructive testing weld joint to be positioned and the three-dimensional data to obtain the three-dimensional model comprises:
   determining a weld joint code of the non-destructive testing weld joint to be positioned;
   matching the weld joint code of the non-destructive testing weld joint to be positioned with the three-dimensional data to determine the position of the non-destructive testing weld joint to be positioned on the three-dimensional model;
   displaying the non-destructive testing weld joint to be positioned and its information on the three-dimensional model according to the position of the non-destructive testing weld joint to be positioned on the three-dimensional model.

In the method for non-destructive testing weld joint positioning in the conventional island of a nuclear power plant according to the present invention, the step of comparing the three-dimensional model of the non-destructive testing weld joint to be positioned with physical object on site, and determining the on-site position of the non-destructive testing weld joint to be positioned based on the comparison result comprises:
receiving the three-dimensional model;
capturing an image on site to obtain the physical object on site;
comparing the three-dimensional model with the physical object on site, and determining the on-site position of the physical object on site and determining the on-site position of the non-destructive testing weld joint to be positioned based on the comparison result.

The implementation of the system and method for non-destructive testing weld joint positioning in the conventional island of a nuclear power plant according to the present invention yields the following beneficial effects: It comprises a BIM system unit, a mobile terminal, and an AR positioning unit. The BIM system unit processes a source drawing and performing data matching for the non-destructive testing weld joint to be positioned, thereby obtaining a three-dimensional model. The mobile terminal transmits the three-dimensional model to the AR positioning unit. The AR positioning unit compares the three-dimensional model of the non-destructive testing weld joint to be positioned with the physical object on site and determines the on-site position of the non-destructive testing weld joint based on the comparison result. The present invention automatically acquires a source drawing through the BIM system unit, converts and analyzes it to generate a three-dimensional model, and utilizes the mobile terminal to transmit the three-dimensional model to the AR positioning unit. This enables the AR positioning unit to compare the three-dimensional model with the physical object on site, accurately identifying the on-site position of the non-destructive testing weld joint to be positioned. This approach not only prevents information distortion caused by manual data transfer but also enhances the efficiency and accuracy of positioning non-destructive testing weld joint.

### BRIEF DESCRIPTION OF THE SEVERAL VIEWS OF THE DRAWINGS

The present invention will be further described below with reference to the accompanying drawings and embodiments, in which:
FIG. 1 is a schematic block diagram of a system for non-destructive testing weld joint positioning in the conventional island of a nuclear power plant, as provided by the present invention;
FIG. 2 is a schematic flowchart of a method for non-destructive testing weld joint positioning in the conventional island of a nuclear power plant, as provided by the present invention.

### DETAILED DESCRIPTION OF THE INVENTION

The following describes the technical solutions in the embodiments of the present invention clearly and completely with reference to the accompanying drawings in the embodiments of the present invention. It is apparent that the described embodiments are only a part of the embodiments of the present invention, rather than all of them. All other embodiments obtained by a person of ordinary skill in the art based on the embodiments of the present invention without creative efforts shall fall within the protection scope of the present invention.

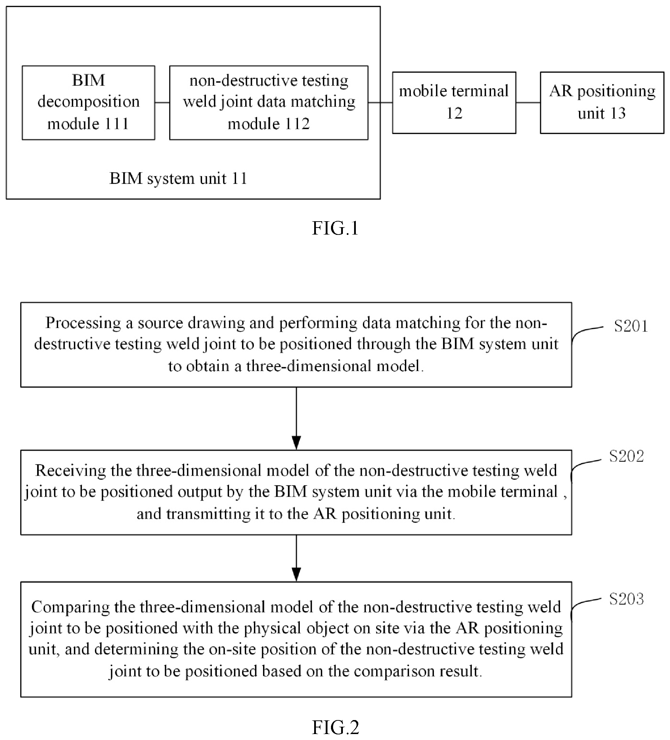

FIG. 1 shows a preferred embodiment of a system for non-destructive testing weld joint positioning in the conventional island of a nuclear power plant provided by the present invention. As shown in FIG. 1, the system for non-destructive testing weld joint positioning in the conventional island of a nuclear power plant includes: a BIM system unit 11, a mobile terminal 12, and an AR positioning unit 13.

Specifically, the BIM system unit 11 is configured to process a source drawing and perform data matching for the non-destructive testing weld joint to be positioned, thereby obtaining a three-dimensional model. The mobile terminal 12 communicates with the BIM system unit and is configured to receive the three-dimensional model of the non-destructive testing weld joint to be positioned, which is output by the BIM system unit, and transmit it to the AR positioning unit 13. The AR positioning unit 13 communicates with the mobile terminal 12 and is configured to compare the three-dimensional model of the non-destructive testing weld joint to be positioned with a physical object on site, and determine the on-site position of the non-destructive testing weld joint to be positioned based on the comparison result.

The present invention automatically acquires a source drawing for the three-dimensional model by utilizing the BIM system unit and decomposes the three-dimensional model to obtain a three-dimensional model. Subsequently, the mobile terminal 12 transmits the three-dimensional models to the AR positioning unit 13. The AR positioning unit 13 compares the three-dimensional model with a physical object on site collected in real-time, thereby accurately identifying the position of the non-destructive testing weld joint to be positioned. This method not only improves the efficiency and accuracy of positioning non-destructive testing weld joint but also enhances the flexibility of positioning non-destructive testing. It can save labor costs and avoid information distortion that may occur during person-to-person information transfer.

Specifically, the BIM system, or Building Information Modeling, is a digital tool applied in engineering design, construction, and management. It involves creating a virtual three-dimensional model of a construction project and using digital technology to provide this model with a complete, consistent information library of the construction project. The present invention leverages the characteristics of the BIM system unit to achieve rapid data extraction and conversion processing. Simultaneously, it utilizes the mobile terminal 12 for data transmission, which avoids human error and improves data transmission efficiency. Furthermore, the present invention employs AR technology to enable natural, direct interaction between users and the environment, facilitating the rapid positioning of non-destructive testing weld joint.

Specifically, in this embodiment, the BIM system unit 11 includes a BIM decomposition module 111 and a non-destructive testing weld joint data matching module 112.

Among these, the BIM decomposition module 111 is configured to obtain a source drawing corresponding to the non-destructive testing weld joint to be positioned, and convert and decompose the source drawing to obtain the three-dimensional data of the non-destructive testing weld joint to be positioned.

In this embodiment, the BIM decomposition module 111 includes: a drawing acquisition module, configured to read the source drawing from a database; and a model decomposition module, connected to the drawing acquisition module and configured to decompose the three-dimensional model to obtain the three-dimensional data of the non-destructive testing weld joint to be positioned. In this embodiment, the three-dimensional data may include, but is not limited to, pipeline segment information, weld information, and the like.

Specifically, the drawing acquisition module reads the source drawing of the non-destructive testing weld joint to be positioned from the BIM system unit to obtain the three-dimensional model. Subsequently, the model decomposition module decomposes the three-dimensional model, thereby obtaining a three-dimensional decomposition diagram of the non-destructive testing weld joint to be positioned. The three-dimensional decomposition diagram can display information such as pipeline segments and welds.

The non-destructive testing weld joint data matching module 112 is connected to the BIM decomposition module 111 and is configured to perform data matching between the non-destructive testing weld joint to be positioned and the three-dimensional data to obtain the three-dimensional model.

In this embodiment, the non-destructive testing weld joint data matching module 112 includes: a code determination module, configured to determine the weld joint code of the non-destructive testing weld joint to be positioned; a matching module, configured to match the weld joint code of the non-destructive testing weld joint to be positioned with the three-dimensional data to determine the position of the non-destructive testing weld joint to be positioned on the three-dimensional model; and a display module, configured to display the non-destructive testing weld joint to be positioned and its associated information on the three-dimensional model based on the position of the non-destructive testing weld joint to be positioned on the three-dimensional model.

Specifically, after the model decomposition module completes the decomposition of the three-dimensional model, the code determination module determines the weld joint code (i.e., the weld number ) of the non-destructive testing weld joint to be positioned. Then, based on this weld joint code, a match is performed with the three-dimensional data to determine the specific position of the non-destructive testing weld joint to be positioned on the three-dimensional model. Once the specific position is determined, the display module of the BIM system unit renders the three-dimensional model, which will then display the non-destructive testing weld joint to be positioned along with its related information (such as dimensions, position, etc.).

In this embodiment, to enhance the intelligence and digitization of positioning while avoiding human errors in data transmission, the present invention utilizes a mobile terminal 12 to complete data transmission between the BIM system unit and the AR positioning unit 13. Here, the mobile terminal 12 is the mobile terminal 12 (e.g., a mobile phone, tablet, etc.) of the NICE nuclear power intelligent construction platform. A dedicated APP is installed on this mobile terminal 12. This dedicated APP connects to the corresponding interface of the BIM system to enable data interaction, thereby importing the three-dimensional model of the non-destructive testing weld joint to be positioned for non-destructive testing displayed in the BIM system unit into the dedicated APP, which then transmits it to the AR positioning unit 13. In this embodiment, the NICE nuclear power intelligent construction platform is an intelligent system that achieves full-range online and digital handover of construction and production operations.

In this embodiment, the AR positioning unit 13 comprises: AR glasses. The AR glasses communicate with the mobile terminal 12 and are configured to compare the three-dimensional model of the non-destructive testing weld joint to be positioned with the physical object on site, and determine the on-site position of the non-destructive testing weld joint to be positioned based on the comparison result.

The AR glasses include: a data acquisition module, which communicates with the mobile terminal 12 and is configured to receive the three-dimensional model; an image acquisition module, which is configured to capture an image on site to obtain the physical objects on site; and a positioning module, which is connected to both the data acquisition module and the image acquisition module, and is configured to compare the three-dimensional model with the physical object on site and determine the on-site position of the non-destructive testing weld joint to be positioned based on the comparison result.

Specifically, the AR glasses are connected and communicate with the dedicated APP on the mobile terminal 12. The three-dimensional model imported into the dedicated APP on the mobile terminal 12 is directly transmitted to the AR glasses, which then displays the received three-dimensional model within the glasses. The AR glasses are worn by on-site weld non-destructive testing personnel. By comparing the three-dimensional model of the non-destructive testing weld joint to be positioned displayed by the AR glasses with the physical object on site (i.e., the on-site scene) it captures, the non-destructive testing weld joint to be positioned can be quickly and accurately identified and positioned.

Referring to FIG.2, which illustrates a method for non-destructive testing weld joint positioning in the conventional island of a nuclear power plant provided by the present invention. This method for non-destructive testing weld joint positioning in the conventional island of a nuclear power plant is implemented using the system for non-destructive testing weld joint positioning in the conventional island of a nuclear power plant provided by the present invention to achieve rapid and accurate positioning of the non-destructive testing weld joint to be positioned.

Specifically, as shown in FIG.2, the method for non-destructive testing weld joint positioning in the conventional island of a nuclear power plant comprises the following steps:
Step S201. Processing a source drawing and performing data matching for the non-destructive testing weld joint to be positioned through the BIM system unit 11 to obtain a three-dimensional model.

In the embodiment of the present invention, the BIM system, i.e., Building Information Modeling, is a digital tool applied in engineering design, construction, and management. It establishes a virtual three-dimensional model of a construction project and utilizes digital technology to provide this model with a complete, reality-consistent information library of construction engineering. The present invention leverages the characteristics of the BIM system to achieve rapid data extraction and data conversion processing. Concurrently, data transmission is performed using a mobile terminal 12, which avoids human error while also enhancing data transmission efficiency. Furthermore, the present invention also utilizes AR technology to enable natural, direct interaction between the user and the environment, achieving rapid positioning of non-destructive testing weld joints.

Specifically, in this embodiment, the step of processing a source drawing and performing data matching for the non-destructive testing weld joint to be positioned to obtain a three-dimensional model includes: obtaining a source drawing corresponding to the non-destructive testing weld joint to be positioned, and converting and decomposing the source drawings to obtain three-dimensional data of the non-destructive testing weld joint to be positioned; performing data matching between the non-destructive testing weld joint to be positioned and the three-dimensional data to obtain the three-dimensional model.

Herein, the step of obtaining a source drawing corresponding to the non-destructive testing weld joint to be positioned, and converting and decomposing the source drawing to obtain the three-dimensional data of the non-destructive testing weld joint to be positioned includes: reading the source drawing from a database; decomposing the three-dimensional model to obtain the three-dimensional data of the non-destructive testing weld joint to be positioned.

In this embodiment, the step of performing data matching between the non-destructive testing weld joint to be positioned and the three-dimensional data to obtain the three-dimensional model includes: determining a weld joint code of the non-destructive testing weld joint to be positioned; matching the weld joint code of the non-destructive testing weld joint to be positioned with the three-dimensional data to determine the position of the non-destructive testing weld joint to be positioned on the three-dimensional model; based on the position of the non-destructive testing weld joint to be positioned on the three-dimensional model, displaying the non-destructive testing weld joint to be positioned and its associated information on the three-dimensional model.

Step S202: Receiving the three-dimensional model of the non-destructive testing weld joint to be positioned output by the BIM system unit via the mobile terminal 12, and transmitting it to the AR positioning unit 13.

In this embodiment, the mobile terminal 12 is a mobile terminal 12 (such as a mobile phone, tablet, etc.) of the NICE nuclear power intelligent construction platform. A dedicated APP is installed on this mobile terminal 12. This dedicated APP connects to corresponding interfaces of the BIM system unit to enable data interaction, thereby importing the three-dimensional model of the non-destructive testing weld joint to be positioned displayed in the BIM system unit into the dedicated APP, which then transmits it to the AR positioning unit 13. In this embodiment, the NICE nuclear power intelligent construction platform is an intelligent system that achieves full-scope online operation and digital handover of construction production business.

Step S203: Comparing the three-dimensional model of the non-destructive testing weld joint to be positioned with the physical object on site via the AR positioning unit 13, and determining the on-site position of the non-destructive testing weld joint to be positioned based on the comparison result.

In this embodiment, the step of comparing the three-dimensional model of the non-destructive testing weld joint to be positioned with physical object on site, and determining the on-site position of the non-destructive testing weld joint to be positioned based on the comparison result includes: receiving the three-dimensional model; capturing an image on site to obtain the physical object on site; comparing the three-dimensional model with the physical object on site, and determining the on-site position of the non-destructive testing weld joint to be positioned based on the comparison result.

The method for non-destructive testing weld joint positioning in the conventional island of a nuclear power plant according to the present invention automatically acquires the three-dimensional model by utilizing the BIM system unit and decomposes it to obtain the three-dimensional model. Subsequently, the three-dimensional model is transmitted to the AR positioning unit 13 via the mobile terminal 12. The AR positioning unit 13 accurately identifies the on-site position of the non-destructive testing weld joint to be positioned by comparing the three-dimensional model with the image of physical object on site captured in real-time. This approach not only improves the efficiency and accuracy of non-destructive testing weld joint positioning but also enhances the flexibility of positioning and non-destructive testing. It can save labor costs and avoid information distortion that may occur during person-to-person information transfer.

The present invention establishes a logical system integrating the BIM model, non-destructive testing weld joint, and AR equipment, along with supporting desktop and mobile management systems, through the BIM system. This enables rapid data acquisition, accurate transmission, and precise position of non-destructive testing weld joint. It achieves data interoperability between the system and personnel, as well as between the virtual and the real, ensuring the precision of non-destructive testing weld joint position.

Various embodiments in this specification are described in a progressive manner, with each embodiment focusing on the differences from other embodiments. The same or similar parts among the various embodiments can be understood by referring to each other. As for the apparatus disclosed in the embodiments, since it corresponds to the method disclosed in the embodiments, the description is relatively brief. For relevant parts, reference can be made to the description in the method section.

Professionals may further appreciate that the units and algorithm steps of the examples described in conjunction with the embodiments disclosed herein can be implemented in electronic hardware, computer software, or a combination of both. To clearly illustrate the interchangeability of hardware and software, the composition and steps of each example have been generally described in terms of function in the foregoing description. Whether these functions are performed by hardware or software depends on the specific application and design constraints of the technical solution. Professionals can use different methods for each specific application to implement the described functions, but such implementation should not be considered beyond the scope of the present invention.

The steps of the methods or algorithms described in conjunction with the embodiments disclosed herein may be implemented directly in hardware, in a software module executed by a processor, or in a combination of both. A software module may reside in Random Access Memory (RAM), internal memory, Read-Only Memory (ROM), Electrically Programmable ROM (EPROM), Electrically Erasable Programmable ROM (EEPROM), registers, a hard disk, a removable disk, a CD-ROM, or any other form of storage medium known in the technical field.

The above embodiments are provided solely to illustrate the technical concept and features of the present invention, with the aim of enabling those skilled in the art to understand the content of the present invention and implement it accordingly. These embodiments are not intended to limit the scope of protection of the present invention. Any equivalent modifications or variations made within the scope of the claims of the present invention shall fall within the coverage of the claims of the present invention.

## Claims

1. A system for non-destructive testing weld joint positioning in the conventional island of a nuclear power plant, wherein by comprising: a BIM system unit, a mobile terminal, and an AR positioning unit;
the BIM system unit is configured to process a source drawing and perform data matching for the non-destructive testing weld joint to be positioned, thereby to obtain a three-dimensional model;
the mobile terminal communicates with the BIM system unit and is configured to receive the three-dimensional model of the non-destructive testing weld joint to be positioned output by the BIM system unit and transmit it to the AR positioning unit;
the AR positioning unit communicates with the mobile terminal and is configured to compare and position the three-dimensional model of the non-destructive testing weld joint to be positioned with a physical object on site, and determine the on-site position of the non-destructive testing weld joint to be positioned based on the comparison result.

2. The system for non-destructive testing weld joint positioning in the conventional island of a nuclear power plant according to claim 1, wherein, the BIM system unit comprises:
a BIM decomposition module, which is configured to obtain a source drawing corresponding to the non-destructive testing weld joint to be positioned and convert and decompose the source drawing to obtain three-dimensional data of the non-destructive testing weld joint to be positioned;
a non-destructive testing weld joint data matching module, which is connected to the BIM model decomposition module and is configured to perform data matching between the non-destructive testing weld joint to be positioned and the three-dimensional data to obtain the three-dimensional model.

3. The system for non-destructive testing weld joint positioning in the conventional island of a nuclear power plant according to claim 2, wherein, the BIM decomposition module comprises:
a drawing acquisition module, which is configured to read the source drawing from a database; the source drawing is a drawing of a three-dimensional model;
a model decomposition module, which is connected to the drawing acquisition module and is configured to decompose the three-dimensional model to obtain the three-dimensional data of the non-destructive testing weld joint to be positioned.

4. The system for non-destructive testing weld joint positioning in the conventional island of a nuclear power plant according to claim 2, wherein, the non-destructive testing weld joint data matching module comprises:
a code determination module, which is configured to determine the weld joint code of the non-destructive testing weld joint to be positioned;
a matching module, which is configured to match the weld joint code of the non-destructive testing weld joint to be positioned with the three-dimensional data to determine the position of the non-destructive testing weld joint to be positioned on the three-dimensional model;
a display module, which is configured to display the non-destructive testing weld joint to be positioned and its information on the three-dimensional model based on the position of the non-destructive testing weld joint to be positioned on the three-dimensional model.

5. The system for non-destructive testing weld joint positioning in the conventional island of a nuclear power plant according to claim 1, wherein, the AR positioning unit comprises: AR glasses;
the AR glasses communicate with the mobile terminal and are configured to compare the three-dimensional model of the non-destructive testing weld joint to be positioned with a physical object on site, and determine the on-site position of the non-destructive testing weld joint to be positioned based on the comparison result.

6. The system for non-destructive testing weld joint positioning in the conventional island of a nuclear power plant according to claim 5, wherein, the AR glasses comprise:
a data acquisition module, which communicates with the mobile terminal and is configured to receive the three-dimensional model;
an image acquisition module, which is configured to capture an image on site to obtain the physical objects on site;
a positioning module, which is connected to the data acquisition module and the image acquisition module respectively, and is configured to compare and position the three-dimensional model with the physical object on site, and determine the on-site position of the non-destructive testing weld joint to be positioned based on the comparison result.

7. A method for non-destructive testing weld joint positioning in the conventional island of a nuclear power plant, applied to the system for non-destructive testing weld joint positioning in the conventional island of a nuclear power plant according to any one of claims 1-6, wherein, comprises the following steps:
processing a source drawing and performing data matching for the non-destructive testing weld joint to be positioned through a BIM system unit to obtain a three-dimensional model;
receiving the three-dimensional model of the non-destructive testing weld joint to be positioned output by the BIM system unit and transmitting it to an AR positioning unit through a mobile terminal;
comparing the three-dimensional model of the non-destructive testing weld joint to be positioned with physical object on site, and determining the on-site position of the non-destructive testing weld joint to be positioned based on the comparison result through the AR positioning unit.

8. The method for non-destructive testing weld joint positioning in the conventional island of a nuclear power plant according to claim 7, wherein, the step of processing a source drawing and performing data matching for the non-destructive testing weld joint to be positioned to obtain a three-dimensional model comprises:
obtaining a source drawing corresponding to the non-destructive testing weld joint to be positioned, and converting and decomposing the source drawing to obtain three-dimensional data of the non-destructive testing weld joint to be positioned;
performing data matching between the non-destructive testing weld joint to be positioned and the three-dimensional data to obtain the three-dimensional model.

9. The method for non-destructive testing weld joint positioning in the conventional island of a nuclear power plant according to claim 8, wherein, the step of obtaining a source drawing corresponding to the non-destructive testing weld joint to be positioned, and converting and decomposing the source drawing to obtain three-dimensional data of the non-destructive testing weld joint to be positioned comprises:
reading the source drawing from a database; the source drawing is a drawing of a three-dimensional model;
decomposing the three-dimensional model to obtain the three-dimensional data of the non-destructive testing weld joint to be positioned;
the step of performing data matching between the non-destructive testing weld joint to be positioned and the three-dimensional data to obtain the three-dimensional model comprises:
determining a weld joint code of the non-destructive testing weld joint to be positioned;
matching the weld joint code of the non-destructive testing weld joint to be positioned with the three-dimensional data to determine the position of the non-destructive testing weld joint to be positioned on the three-dimensional model;
displaying the non-destructive testing weld joint to be positioned and its information on the three-dimensional model according to the position of the non-destructive testing weld joint to be positioned on the three-dimensional model.

10. The method for non-destructive testing weld joint positioning in the conventional island of a nuclear power plant according to claim 7, wherein, the step of comparing and positioning the three-dimensional model of the non-destructive testing weld joint to be positioned with physical object on site, and determining the on-site position of the non-destructive testing weld joint to be positioned with physical object on site based on the comparison result comprises:
receiving the three-dimensional model;
capturing an image on site to obtain the physical object on site;
comparing and positioning the three-dimensional model with the physical object on site, and determining the on-site position of the non-destructive testing weld joint to be positioned based on the comparison result.
